# EUROPÄISCHE PATENTSCHRIFT

(11) **EP 3 189 932 B1**
(45) Veröffentlichungstag und Bekanntmachung des Hinweises auf die Patenterteilung: **16.05.2018**
(21) Anmeldenummer: 16150310.7
(22) Anmeldetag: 06.01.2016
(51) Int. Cl.: B23P 19/08, B25B 27/00, B25B 27/28, F16L 25/00, F16L 11/15

(54) **VERFAHREN UND VORRICHTUNG ZUR EINFÜHRUNG EINES DICHTUNGSRINGES IN EINE DREHBARE HALTERUNG**
METHOD AND DEVICE FOR THE INTRODUCTION OF A SEALING RING INTO A ROTATING SUPPORT
PROCEDE ET DISPOSITIF D'INTRODUCTION D'UNE BAGUE D'ETANCHEITE DANS UNE FIXATION ROTATIVE

(43) Veröffentlichungstag der Anmeldung: 12.07.2017
(73) Patentinhaber: Lüers Maschinen- und Stahlbau GmbH, 49424 Lutten-Goldenstedt (DE)
(72) Erfinder: Lüers, Gregor, 49424 Lutten (DE)
(74) Vertreter: Meyer, Ludgerus

(56) Entgegenhaltungen:
- JP-A- H06 171 747
- JP-A- 2002 098 280
- SU-A1- 885 661
- SU-A1- 904 973
- SU-A1- 1 119 817
- SU-A1- 1 742 024

## Beschreibung

Die Erfindung betrifft ein Verfahren zur Einführung eines radial dehnbaren Dichtungsringes in eine topfförmige drehbare Halterung nach dem Oberbegriff des Anspruchs 1 sowie eine Vorrichtung zur Einführung eines radial dehnbaren Dichtungsringes in eine topfförmige drehbare Halterung nach dem Oberbegriff des Anspruchs 6. Eine solche Vorrichtung ist aus der SU 111 9817 bekannt. In der Kanalisationstechnik kommen häufig ein- oder doppelwandige Wellrohre zum Einsatz, deren Außenoberfläche eine gewellte Struktur aufweist, die aus Tälern und Höhen besteht. Zur Verbindung derartiger Wellrohre mit Muffen oder einem weiteren Rohrabschnitt ist zur Abdichtung gegeneinander in der Regel ein Dichtungsring erforderlich, der in ein endseitiges Tal des Spitzendes eines Rohres eingelegt wird, wobei das Spitzende mit der Dichtung dann in das Muffenende des anderen Rohrelements eingesteckt wird. Bei größeren Rohrdurchmessern ist das Aufbringen eines Dichtungsringes jedoch schwierig, da Dichtungsringe mit großem Durchmesser nur mit großen Kräften gedehnt werden können, was erforderlich ist, um den Dichtungsring über eine Höhe zu schieben.
Es sind ferner sogenannte Ultra-Rib-Rohre bekannt, deren Außenseite stark gerippt ist, wobei zur Verbindung zweier entsprechender Rohre ebenfalls Dichtungen zum Einsatz kommen, die auf die Außenseite des Rohres zwischen zwei benachbarten Rippen aufzubringen sind.

In der gemäß Art. 54(3) EPÜ älteren EP 2 965 859 A1 sind ein Verfahren und eine Vorrichtung zum Aufbringen eines Dichtungsringes auf ein Wellrohr angegeben, bei dem der Dichtungsring mittels einer drehbaren Halterung auf eine solche Drehzahl gebracht wird, dass durch Fliehkraft und Dehnung sein Innenradius größer als der maximale Außenradius des Rohres im Bereich der äußeren Oberfläche des Rohres wird, über die die Dichtung bis zu einer Vertiefung zu führen ist. Der Dichtungsring wird dabei im drehenden Zustand vom Ende des Rohres über den Bereich des maximalen Außenradius bis zu der Vertiefung geführt. Dann wird die Drehzahl der Halterung mit dem aufgenommen Dichtungsring abgesenkt, bis der Dichtungsring durch Rückdehnung in die Vertiefung eintritt.

Bei diesem Verfahren erfolgt die Einführung des Dichtungsringes in die topfförmige Halterung durch Aufbringen des Dichtungsringes auf einen zentralen Haltedorn, auf dem bei Drehung der topfförmigen Halterung der Dichtungsring bei hoher Drehzahl soweit gedehnt wird, dass er sich an die Innenwand der topfförmigen Halterung anlehnt. Der Dichtungsring kann dann im drehenden Zustand nach Einführung eines Wellrohres in die drehende Halterung in eine Vertiefung des Wellrohres eingebracht werden.

Der Erfindung liegt die Aufgabe zugrunde, ein Verfahren und eine Vorrichtung zur Einführung eines radial dehnbaren Dichtungsringes in eine topfförmige drehbare Halterung anzugeben, bei dem die Zuführung des Dichtungsringes im Wesentlichen automatisch erfolgen kann.

Diese Aufgabe wird durch das im Anspruch 1 angegebene Verfahren und die im Anspruch 6 angegebene Vorrichtung gelöst. Vorteilhafte Weiterbildungen der Erfindung sind in Unteransprüchen angegeben.

Bei dem erfindungsgemäßen Verfahren wird ein Dichtungsring in vertikal hängender Ausrichtung bei Drehung der Halterung mit niedriger Drehzahl entlang einer schraubenförmigen Oberfläche eines horizontal gerichteten zentralen Haltedorns der Halterung von einem Aufgabeende des Haltedorns zum Innenboden der topfförmigen Halterung überführt, bevor die Halterung zur radialen Dehnung des Dichtungsringes auf eine erhöhte Drehzahl gebracht wird.

Bei einer entsprechenden Vorrichtung weist die Halterung einen zentralen Haltedorn auf, der eine schraubenförmige Oberfläche mit vorzugsweiser großer Steigerung und Gewindetiefe enthält, über die ein dem Aufgabeende des Haltedorns zugeführter Dichtungsring im hängenden Zustand bei niedriger Drehzahl der Halterung zur Bodeninnenseite der topfförmigen Halterung überführbar ist. Sobald der Dichtungsring die Bodeninnenseite erreicht hat, kann die Drehzahl der Halterung soweit erhöht werden, dass der zugeführte Dichtungsring radial gedehnt wird, bis er an der Wandinnenseite der Halterung zur Anlage kommt.

Durch die Verwendung eines Haltedorns mit schraubenförmiger Oberfläche kann die Aufgabe eines Dichtungsringes in einem größeren Abstand von der Bodeninnenseite erfolgen. Bei langsamer Drehung des Haltedorns wird der Dichtungsring aufgrund der schraubenförmigen Oberfläche des Haltedorns, der einen kleineren Durchmesser als der Dichtungsring aufweist, selbsttätig gegen die Bodeninnenseite der Halterung geführt. Ein manuelles Eingreifen in die Halterung ist daher nicht erforderlich.

Gemäß einer bevorzugten Ausführungsform ist ein Magazinspeicher vorgesehen, aus dem Dichtungsringe einzeln abgegeben und mittels einer Übergabeeinheit auf das Aufgabeende des Haltedorns übergeben werden können. Auf diese Weise kann eine große Menge an fertiggestellten Dichtungsringen, beispielsweise 20 - 50 Ringe, in einen Magazinspeicher eingesetzt werden, von dem sie selbsttätig einzeln in die Halterung eingeführt werden können.

Der Magazinspeicher ist vorzugsweise als horizontal angeordneter Stab ausgebildet, der eine schraubenförmige Oberfläche aufweist, auf der eine Mehrzahl von Dichtungsringen hängend aufgenommen ist, über die bei Drehung des Stabes die Dichtungsringe zum Abgabeende des Stabes befördert werden. Durch diesen Verfahrensschritt können die Ringe einzeln von dem Stab abgenommen werden oder abfallen, wobei sie in eine Übergabeeinheit eintreten, mittels der sie an das Aufgabeende des Haltedorns übergeben werden.

Vorzugsweise besteht die Übergabeeinheit aus einer schalenförmigen Aufnahme, in die der Dichtungsring nach Abfallen von dem Stab des Magazinspeichers hineinfällt. Die Übergabeeinheit kann einen Dichtungsring entweder linear oder verschwenkbar zum benachbart angeordneten Aufgabeende des Haltedorns überführen.

Die schraubenförmig ausgebildete Oberfläche des Stabes im Magazinspeicher ist vorzugsweise so gestaltet, dass deren Gewindesteigung zum Abgabeende hin zunimmt, so dass bei Drehung des Stabes sich der Abstand der Ringe zum Abgabeende hin vergrößert und damit ein leichteres Abnehmen eines Ringes vom Stab möglich oder ein gesichertes einzelnes Abfallen eines Dichtungsringes vom Stab gewährleistet ist.

Der zentrale Haltedorn kann entweder zylinderförmig oder auch kegelförmig gestaltet werden, wobei im letzteren Fall das Aufnehmen eines Dichtungsringes erleichtert ist.

Anstelle einer schalenförmigen Aufnahme der Übergabeeinheit kann die Übergabeeinheit auch als Haken- oder Klammereinheit zur Erfassung eines vom Abgabeende des Magazinspeichers abgegebenen Dichtungsringes ausgebildet sein. Eine solche Klammereinheit kann mechanisch einfacher als eine linear verschiebbare oder verschwenkbare Übergabeeinheit ausgebildet sein.

Die Erfindung wird nachstehend anhand eines Ausführungsbeispiels näher erläutert. Es zeigen:
- Fig. 1: eine Seitenansicht der wesentlichen Elemente eines Magazinspeichers,
- Fig. 2: eine perspektivische Ansicht eines Magazinspeichers,
- Fig. 3: eine Schnittansicht einer topfförmigen Halterung,
- Fig. 4: eine perspektivische Ansicht einer topfförmigen Halterung,

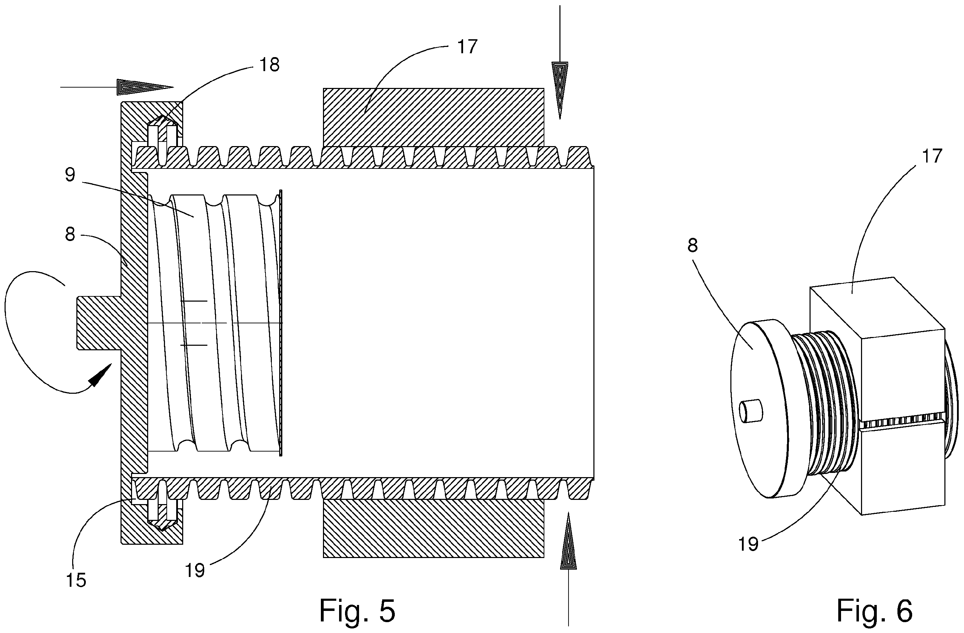

- Fig. 5: eine topfförmige Halterung mit eingeführtem Wellrohr, und
- Fig. 6: eine perspektivische Ansicht von Fig. 5.

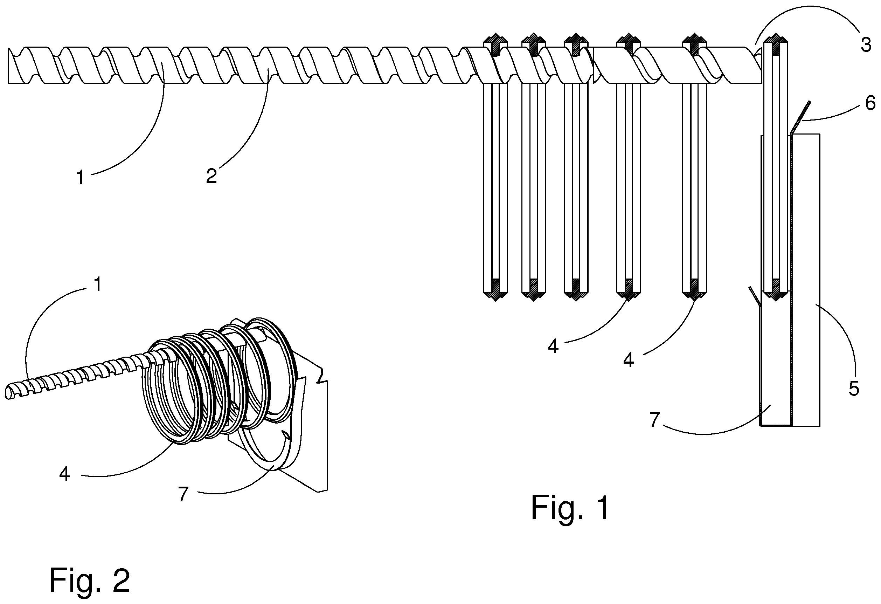

Der in den Figuren 1 und 2 dargestellte Magazinspeicher 1 ist im Wesentlichen durch einen horizontal verlaufenden Stab mit einer schraubenförmigen Vertiefung 2 gebildet. Auf diesen Stab können eine Reihe von Dichtungsringen 4 aufgebracht werden, die entweder händisch oder über eine automatische Zuführung auf das freie Ende des Stabes aufgebracht werden. Die Dichtungsringe 4 hängen frei von dem Stab herunter. Sie hängen in der schraubenförmigen Vertiefung parallel nebeneinander und werden bei Drehung des Stabes zum Abgabeende 3 des Magazinspeichers 1 befördert. Die schraubenförmige Vertiefung 2 hat am Abgabeende 3 eine erhöhte Steigung, so dass der Abstand zwischen den geförderten Dichtungsringen 4 sich zum Abgabeende hin vergrößert.

Ein am Abgabeende 3 bei Drehung des Stabes abfallender Dichtungsring fällt durch Eigengewicht in eine Schale 7, die Teil einer Übergabeeinheit 5 ist. Zum sicheren Einführen des Dichtungsringes 4 in die Schale 7 weist die Übergabeeinheit 5 eine oben angesetzte Führung 6 auf. Um zu verhindern, dass zwei Ringe gleichzeitig in die Übergabeeinheit fallen, kann die Drehrichtung des Stabes nach Abgabe eines Dichtungsringes kurz umgekehrt werden.

Fig. 2 zeigt die schalenförmige Ausbildung 7 an der Vorderseite der Übergabeeinheit 5.

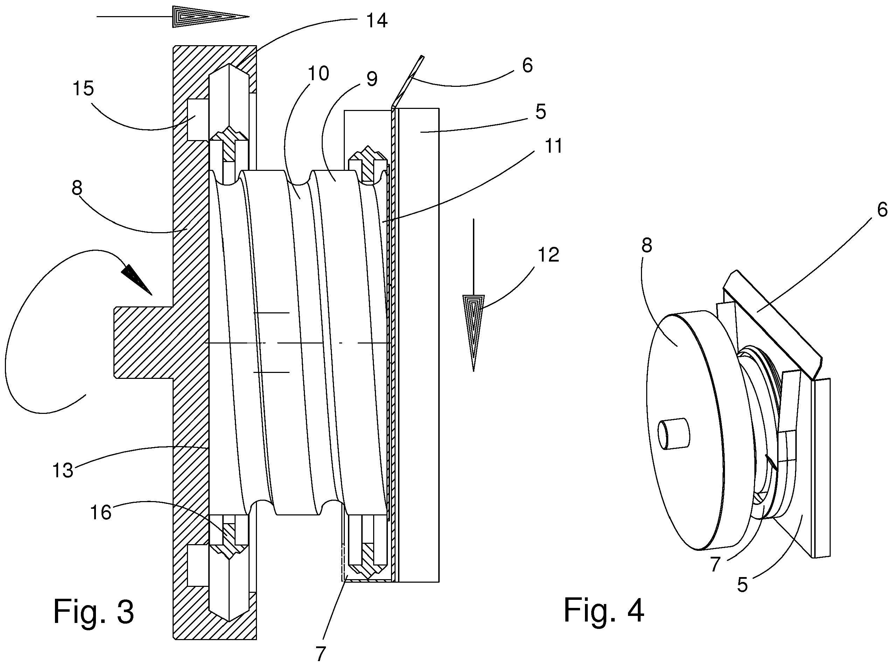

Die untere Rundung der Schale entspricht im Wesentlichen der Form eines Dichtungsringes. Die Übergabeeinheit 5 wird nun mittels einer geeigneten Linearführung oder durch eine Schwenkbewegung vor die Stirnseite des Haltedorns 9 der Halterung 8 gemäß Fig. 3 geführt. Wenn die Übergabeeinheit 5 vor die Stirnseite des Haltedorns 9 gebracht ist, kann der sich in der Schale 7 befindende Dichtungsring 4 in die schraubenförmige Vertiefung 10 des Haltedorns 9 eintreten. Der Haltedorn 9 weist einen etwas geringeren Durchmesser als der Dichtungsring 4 auf, so dass bei Drehung des Haltedorns 9 der Dichtungsring entlang der schraubenförmigen Vertiefung 10 in Richtung auf den Innenboden 13 der Halterung 8 gefördert wird. Die Übergabeeinheit 5 wird dann relativ zum Haltedorn 9 entfernt und kann nun einen weiteren Dichtungsring 4 aus dem Magazinspeicher aufnehmen.

Fig. 3 zeigt eine zylinderstabförmige Ausbildung des Haltedorns 9. Der Haltedorn kann jedoch auch kegelförmig mit einem kleineren Durchmesser am Aufgabeende 11 ausgebildet sein, um das Aufnehmen eines Dichtungsringes zu erleichtern. Dies erfolgt dadurch, dass Haltedorn und Übergabeeinheit zueinander bewegt werden, bis der Haltedorn in den Ringquerschnitt des Dichtungsringes eingeführt ist. Beim Absenken der Übergabeeinheit wird der Dichtungsring auf den Haltedorn übergeben.

Die Halterung 8 lässt sich über einen motorischen Antrieb auf eine hohe Geschwindigkeit bringen. Die Halterung 8 ist topfförmig ausgebildet und weist einen Innenboden 13 sowie eine Außenwand mit der Wandinnenseite 14 auf. Die Wandinnenseite 14 ist profiliert, um an das Profil eines Dichtungsringes 4 angepasst zu sein.

Wenn bei leichter Drehung der Halterung 8 ein zunächst ungedehnter Dichtungsring 16 den Innenboden 13 erreicht hat, wird die Drehzahl der Halterung 8 soweit erhöht, dass der Dichtungsring 16 sich radial dehnt und an der Wandinnenseite 14 zur Anlage kommt. In diesem Zustand wird ein Wellrohr 19, das zuvor über eine Klammer 17 zur Verhinderung einer Drehung festgeklemmt ist, stirnseitig bis in eine Ringvertiefung 15 eingeführt. Nun kann die Drehzahl der Halterung 8 abgesenkt werden, so dass sich der gedehnte Dichtungsring 18 in seinem Durchmesser verringert und in ein Tal des Wellrohres 19 eintreten kann. Er wird dabei abrupt abgebremst und erreicht unmittelbar seine Endform und Stellung in dem Wellrohr. Das Wellrohr wird dann von der topfförmigen Halterung entfernt und die Drehzahl der Halterung 8 wird weiter abgesenkt bis zum Ruhezustand.

Nun kann ein neuer Zyklus zum Aufbringen eines Dichtungsringes auf ein Wellrohr erfolgen.

### Bezugszeichen

- 1: Magazinspeicher
- 2: schraubenförmige Vertiefung
- 3: Abgabeende
- 4: Dichtungsringe
- 5: Übergabeeinheit
- 6: Führung
- 7: Schale
- 8: Halterung
- 9: Haltedorn
- 10: schraubenförmige Vertiefung
- 11: Aufgabeende
- 12: Verschiebevorrichtung
- 13: Innenboden
- 14: Wandinnenseite
- 15: Ringvertiefung
- 16: ungedehnter Dichtungsring
- 17: Klammer
- 18: gedehnter Dichtungsring
- 19: Wellrohr

## Patentansprüche

1. Verfahren zur Einführung eines radial dehnbaren Dichtungsringes (4) in eine topfförmige drehbare Halterung (8) mit einem radial gerichteten Innenboden (13) und einer umlaufenden Wandinnenseite (14), wobei der in die Halterung (8) eingeführte Dichtungsring (4), dessen Außendurchmesser im Ruhezustand kleiner als der Wandinnendurchmesser der Halterung (8) ist, durch Drehung der Halterung (8) unter hoher Drehzahl um ihre Achse radial soweit gedehnt werden kann, dass sein Außenumfang an der Wandinnenseite der Halterung (8) zur Anlage kommt,
**dadurch gekennzeichnet, dass**
der Dichtungsring (4) in vertikal hängender Ausrichtung unter Drehung der Halterung (8) mit niedriger Drehzahl entlang einer schraubenförmigen Oberfläche eines horizontal gerichteten zentralen Haltedorns (9) der Halterung von einem Aufgabeende des Haltedorns (9) zum Innenboden der topfförmigen Halterung (8) überführt wird, bevor die Halterung (8) zur radialen Dehnung der Dichtungsrings (4) auf eine erhöhte Drehzahl gebracht wird.

2. Verfahren nach Anspruch 1,
**dadurch gekennzeichnet, dass**
ein Magazinspeicher (1) vorgesehen ist, aus dem Dichtungsringe (4) einzeln entnommen und mittels einer Übergabeeinheit (5) auf das Aufgabeende (11) des Haltedorns (9) übergeben werden.

3. Verfahren nach Anspruch 2,
**dadurch gekennzeichnet, dass**
der Magazinspeicher (1) durch einen mit einer schraubenförmigen Oberfläche versehenen horizontal angeordneten Stab gebildet ist, auf dem eine Mehrzahl von Dichtungsringen (4) hängend aufgenommen ist, die bei Drehung des Stabes zum Abgabeende (3) des Stabes befördert werden.

4. Verfahren nach Anspruch 2,
**dadurch gekennzeichnet, dass**
die Übergabeeinheit zwischen dem Magazinspeicher (1) und dem Haltedorn (9) verschwenkbar ist.

5. Verfahren nach Anspruch 1,
**dadurch gekennzeichnet, dass**
dass die Halterung (8) in drehendem Zustand in Axialrichtung koaxial über das Ende eines Wellrohres (19) geführt werden kann, und dass dann die Drehzahl der Halterung (8) soweit abgesenkt wird, dass der Dichtungsring (4) in eine ringförmige Umfangsvertiefung des Rohres (19) eintritt und dass die Halterung (8) dann von dem Rohr (19) entfernt wird.

6. Vorrichtung zur Einführung eines radial dehnbaren Dichtungsrings (18) in eine topfförmige drehbare Halterung (8) mit einem radial gerichteten Innenboden (13) und einer umlaufenden Wandinnenseite (14), wobei der Dichtungsring durch Drehung der Halterung (8) unter hoher Drehzahl um ihre Achse radial soweit dehnbar ist, dass sein Außenumfang an der Wandinnenseite (14) der Halterung (8) zur Anlage kommt,
**dadurch gekennzeichnet, dass**
die Halterung (8) einen zentralen Haltedorn (9) mit einer schraubenförmigen Oberfläche aufweist, über die ein am Aufgabeende (11) des Haltedorns (9) zugeführter Dichtungsring in hängendem Zustand bei niedriger Drehzahl der Halterung (8) zur Bodeninnenseite der topfförmigen Halterung überführbar ist, und dass die Drehzahl der Halterung (8) soweit erhöht werden kann, dass ein über den zentralen Haltedorn (9) eingeführter Dichtungsring radial gedehnt wird, bis er an der Wandinnenseite (14) der Halterung (8) zur Anlage kommt.

7. Vorrichtung nach Anspruch 6,
**dadurch gekennzeichnet, dass**
ein Magazinspeicher (1) mit einem horizontal angeordneten Stab vorgesehen ist, auf dem eine Mehrzahl von Dichtungsringen (4) hängend aufgenommen werden kann, wobei der Stab eine schraubenförmig ausgebildete Oberfläche aufweist, über die die Dichtungsringe (4) bei Drehung des Stabes zum Abgabeende (3) des Stabes befördert werden können, und dass vom Abgabeende (3) des Stabes abgegebene Dichtungsringe (4) mittels einer Übergabeeinheit (5) auf das Aufgabeende (11) des Haltedorns (9) überführbar sind.

8. Vorrichtung nach Anspruch 7,
**dadurch gekennzeichnet, dass**
die Übergabeeinheit (5) eine halbschalenförmige Aufnahme enthält, in der jeweils ein vom Abgabeende (3) des Magazinspeichers (1) abgegebener Dichtungsring (4) aufgenommen und aus der ein Dichtungsring (4) auf das Aufgabeende (11) des Haltedorns (9) abgegeben werden kann.

9. Vorrichtung nach Anspruch 7,
**dadurch gekennzeichnet, dass**
die Gewindesteigung der schraubenförmig ausgebildeten Oberfläche des Stabes zum Abgabeende (11) hin zunimmt.

10. Vorrichtung nach Anspruch 8,
**dadurch gekennzeichnet, dass**
die Übergabeeinheit (5) zwischen dem Magazinspeicher (1) und dem Haltedorn (9) verschwenkbar oder verschiebbar ist.

11. Vorrichtung nach Anspruch 6,
**dadurch gekennzeichnet, dass**
der zentrale Haltedorn (9) kegelförmig ausgebildet ist, wobei das Aufgabeende (11) einen kleineren Durchmesser als das der Bodeninnenseite der Halterung (8) zugewandten Ende des Haltedorns (9) aufweist.

12. Vorrichtung nach Anspruch 7,
**dadurch gekennzeichnet, dass**
die Übergabeeinheit (5) als eine Haken- oder Klammereinheit zur Erfassung eines vom Abgabeende (3) des Magazinspeichers (1) abgegebenen Dichtungsringes (4) ausgebildet ist.

## Claims

1. Method for inserting a radially extendable sealing ring (4) into a crucible-shaped rotatable holder (8) comprising a radially oriented inner base (13) and a peripheral inner wall face (14), it being possible to radially extend the sealing ring (4), which is inserted into the holder (8) and of which the outer diameter is smaller in the rest state than the inner wall diameter of the holder (8), around the axis thereof by rotating the holder (8) at a high rotational speed until the outer periphery of said sealing ring comes into abutment against the inner wall face of the holder (8),
**characterised in that**
the sealing ring (4) is transferred in a vertically suspended orientation from a feed end of a horizontally oriented central holding mandrel (9) of the holder to the inner base of the crucible-shaped holder (8) along a screw-like surface of the holding mandrel (9) by rotating the holder (8) at a low rotational speed, before the holder (8) is then rotated at a higher speed in order to radially extend the sealing ring (4).

2. Method according to claim 1,
**characterised in that**
a magazine store (1) is provided, from which sealing rings (4) are removed individually and transferred via a transfer unit (5) to the feed end (11) of the holding mandrel (9).

3. Method according to claim 2,
**characterised in that**
the magazine store (1) is formed of a horizontally arranged rod provided with a screw-like surface, on which rod a plurality of sealing rings (4) is received in a suspended manner, which sealing rings are conveyed to the dispensing end (3) of the rod when said rod is rotated.

4. Method according to claim 2,
**characterised in that**
the transfer unit can be pivoted between the magazine store (1) and the holding mandrel (9).

5. Method according to claim 1,
**characterised in that**
the holder (8), when being rotated, can be guided in an axial direction coaxially over the end of a corrugated tube (19), and **in that** the rotational speed of the holder (8) is then reduced until the sealing ring (4) enters an annular peripheral recess of the tube (19) and until the holder (8) is then removed from the tube (19).

6. Device for inserting a radially extendable sealing ring (18) into a crucible-shaped rotatable holder (8) comprising a radially oriented inner base (13) and a peripheral inner wall face (14), it being possible to radially extend the sealing ring around the axis thereof by rotating the holder (8) at a high rotational speed until the outer periphery of said sealing ring comes into abutment against the inner wall face (14) of the holder (8),
**characterised in that**
the holder (8) comprises a central holding mandrel (9) having a screw-like surface, via which a sealing ring supplied to the feed end (11) of the holding mandrel (9) and in the suspended state can be transferred to the inner base face of the crucible-shaped holder at a low rotational speed of the holder (8), and **in that** the rotational speed of the holder (8) is increased until a sealing ring inserted via the central holding mandrel (9) is radially extended until it comes into abutment against the inner wall face (14) of the holder (8).

7. Device according to claim 6,
**characterised in that**
a magazine store (1) comprising a horizontally arranged rod is provided, on which rod a plurality of sealing rings (4) can be received in a suspended manner, the rod comprising a screw-like surface via which the sealing rings (4) can be conveyed to the dispensing end (3) of the rod when the rod is rotated, and **in that** sealing rings (4) dispensed from the dispensing end (3) of the rod can be transferred to the feed end (11) of the holding mandrel (9) by means of a transfer unit (5).

8. Device according to claim 7,
**characterised in that**
the transfer unit (5) comprises a receiving portion in the shape of a half-shell, in which receiving portion in each case one sealing ring (4) dispensed from the dispensing end (3) of the magazine store (1) can be received and from which receiving portion a sealing ring (4) can be dispensed onto the feed end (11) of the holding mandrel (9).

9. Device according to claim 7,
**characterised in that**
the thread pitch of the screw-like surface of the rod increases towards the dispensing end (11).

10. Device according to claim 8,
**characterised in that**
the transfer unit (5) can be pivoted or slid between the magazine store (1) and the holding mandrel (9).

11. Device according to claim 6,
**characterised in that**
the central holding mandrel (9) is tapered, the feed end (11) having a smaller diameter than the end of the holding mandrel (9) facing the inner base face of the holder (8).

12. Device according to claim 7,
**characterised in that**
the transfer unit (5) is designed as a hooking or clamping unit for collecting a sealing ring (4) dispensed from the dispensing end (3) of the magazine store (1).

## Revendications

1. Procédé pour introduire une bague d'étanchéité (4) extensible radialement dans une fixation rotative en forme de godet (8) avec un fond intérieur (13) dirigé radialement et un côté intérieur de paroi périphérique (14), étant précisé que la bague d'étanchéité (4) qui est introduite dans la fixation (8) et dont le diamètre extérieur, au repos, est plus petit que le diamètre intérieur de paroi de ladite fixation (8), peut être élargie radialement grâce à la rotation de la fixation (8) sur son axe à une vitesse de rotation élevée, au point que la circonférence extérieure de ladite bague d'étanchéité (4) vienne s'appliquer contre le côté intérieur de paroi de la fixation (8), **caractérisé en ce que** la bague d'étanchéité (4) est transférée - en étant orientée et suspendue à la verticale et grâce à la rotation de la fixation (8) à une vitesse de rotation faible - le long d'une surface hélicoïdale d'un mandrin central (9) de la fixation dirigé à l'horizontale, d'une extrémité de chargement du mandrin (9) jusqu'au fond intérieur de la fixation en forme de godet (8), avant que ladite fixation (8) pour l'extension radiale de la bague d'étanchéité (4) ne soit amenée à une vitesse de rotation plus élevée.

2. Procédé selon la revendication 1, **caractérisé en ce qu'**il est prévu un magasin (1) à partir duquel les bagues d'étanchéité (4) sont prélevées individuellement et sont transférées à l'aide d'une unité de transfert (5) sur l'extrémité de chargement (11) du mandrin (9).

3. Procédé selon la revendication 2, **caractérisé en ce que** le magasin (1) est formé par une barre, pourvue d'une surface hélicoïdale et disposée à l'horizontale, sur laquelle sont suspendues plusieurs bagues d'étanchéité (4) qui, quand la barre tourne, sont amenées jusqu'à l'extrémité de sortie (3) de la barre.

4. Procédé selon la revendication 2, **caractérisé en ce que** l'unité de transfert est apte à pivoter entre le magasin (1) et le mandrin (9).

5. Procédé selon la revendication 1, **caractérisé en ce que** la fixation (8), en rotation, peut être amenée dans le sens axial sur l'extrémité d'un tuyau ondulé (19), coaxialement, et **en ce que** la vitesse de rotation de ladite fixation (8) est ensuite réduite jusqu'à ce que la bague d'étanchéité (4) entre dans un creux périphérique annulaire du tuyau (19), et **en ce que** ladite fixation (8) est ensuite enlevée du tuyau (19).

6. Dispositif pour introduire une bague d'étanchéité (18) extensible radialement dans une fixation rotative en forme de godet (8) avec un fond intérieur (13) dirigé radialement et un côté intérieur de paroi périphérique (14), étant précisé que la bague d'étanchéité (4) est extensible radialement grâce à la rotation de la fixation (8) sur son axe à une vitesse de rotation élevée, au point que la circonférence extérieure de ladite bague d'étanchéité (4) vienne s'appliquer contre le côté intérieur de paroi (14) de la fixation (8), **caractérisé en ce que** la fixation (8) présente un mandrin central (9) avec une surface hélicoïdale sur laquelle une bague d'étanchéité amenée au niveau de l'extrémité de chargement (11) du mandrin (9) est apte à être transférée, suspendue, sur le côté intérieur de fond de la fixation en forme de godet alors que ladite fixation (8) tourne à une vitesse de rotation faible, et **en ce que** la vitesse de rotation de la fixation (8) peut être augmentée au point qu'une bague d'étanchéité introduite par l'intermédiaire du mandrin central (9) est élargie radialement jusqu'à ce qu'elle vienne s'appliquer contre le côté intérieur de paroi (14) de la fixation (8).

7. Dispositif selon la revendication 6, **caractérisé en ce qu'**il est prévu un magasin (1) avec une barre, disposée à l'horizontale, sur laquelle plusieurs bagues d'étanchéité (4) peuvent être suspendues, ladite barre présentant une surface hélicoïdale sur laquelle les bagues d'étanchéité (4) peuvent être transportées jusqu'à l'extrémité de sortie (3) de la barre, lors de la rotation de celle-ci, et **en ce que** les bagues d'étanchéité (4) qui viennent de l'extrémité de sortie (3) de la barre sont aptes à être transférées à l'aide d'une unité de transfert (5) sur l'extrémité de chargement (11) du mandrin (9).

8. Dispositif selon la revendication 7, **caractérisé en ce que** l'unité de transfert (5) contient un logement en forme de demi-coque dans lequel une bague d'étanchéité (4) provenant de l'extrémité de sortie (3) du magasin (1) peut être logée, et à partir duquel une bague d'étanchéité (4) peut être déposée sur l'extrémité de chargement (11) du mandrin (9).

9. Dispositif selon la revendication 7, **caractérisé en ce que** le pas de vis de la surface hélicoïdale de la barre va en augmentant en direction de l'extrémité de sortie (3).

10. Dispositif selon la revendication 8, **caractérisé en ce que** l'unité de transfert (5) est apte pivoter ou à coulisser entre le magasin (1) et le mandrin (9).

11. Dispositif selon la revendication 6, **caractérisé en ce que** le mandrin central (9) est conique, l'extrémité de chargement (11) présentant un plus petit diamètre que l'extrémité du mandrin (9) tournée vers le côté intérieur de fond de la fixation (8).

12. Dispositif selon la revendication 7, **caractérisé en ce que** l'unité de transfert (5) est conçue comme une unité à crochet ou à pince pour saisir une bague d'étanchéité (4) provenant de l'extrémité de sortie (3) du magasin (1).
